## Europäisches Patentamt

## European Patent Office

## Office européen des brevets

(11) Veröffentlichungsnummer: **0 123 882**
**A1**

(12) # EUROPÄISCHE PATENTANMELDUNG

(21) Anmeldenummer: **84103151.1**

(51) Int. Cl.³: **C 08 F 6/02**

(22) Anmeldetag: **22.03.84**

(30) Priorität: **02.04.83 DE 3312152**

(43) Veröffentlichungstag der Anmeldung: **07.11.84**
**Patentblatt 84/45**

(84) Benannte Vertragsstaaten: **AT BE DE FR GB IT**

(71) Anmelder: **BASF Aktiengesellschaft,**
**Carl-Bosch-Strasse 38, D-6700 Ludwigshafen (DE)**

(72) Erfinder: **Huber, Karl, Bensheimer Ring 6a,**
**D-6710 Frankenthal (DE)**
Erfinder: **Metzger, Werner, Dr., Bergstrasse 12,**
**D-6717 Hessheim (DE)**

(54) **Verfahren zur Aufbereitung von kleinteiligen, durch Polymerisation mittels Halogen enthaltender Ziegler-Natta-Katalysatoren gewonnenen Polyolefinen.**

(57) Rahmen ist ein Verfahren zur Aufbereitung von kleinteiligen, durch Polymerisation mittels Halogen enthaltender Ziegler-Natta-Katalysatoren gewonnenen Polyolefinen, wobei man kontinuierlich (1) in einem Granulier-Extruder mit Schmelz-, Entgasungs- sowie Austragszone, (1.1) erst das Polyolefin in die Schmelzzone einbringt, dort unter Aufschmelzen erhitzt, (1.2) dann das aufgeschmolzene Polyolefin in die Entgasungszone weiterleitet, dort zum Abtreiben flüchtiger Bestandteile einem Vakuum aussetzt, (1.3) daraufhin das entgaste Polyolefin in die Austragszone einbringt, wobei gewünschtenfalls Additive zugesetzt werden, und (1.4) schließlich das auszutragende Polyolefin extrudiert sowie granuliert, und (2) zum Polyolefin unmittelbar vor oder in der Schmelzzone eine kleine Menge Propenoxid sowie eine kleine Menge Wasser zugibt. Charakteristikum ist, daß (a) relativ sehr kleine Mengen Propenoxid zugegeben werden und (b) das Propenoxid in Form einer homogenen echten Lösung in Wasser vorliegt. Ergebnis ist eine verringerte Korrosivität der aufbereiteten Polyolefine.

Verfahren zur Aufbereitung von kleinteiligen, durch Polymerisation
mittels Halogen enthaltender Ziegler-Natta-Katalysatoren gewonnenen
Polyolefinen

Die vorliegende Erfindung betrifft ein Verfahren zur Aufbereitung von
kleinteiligen, einen Teilchendurchmesser unter 5, insbesondere unter 3 mm
aufweisenden, durch Polymerisation mittels Halogen, insbesondere Chlor
enthaltenden Ziegler-Natta-Katalysatoren gewonnenen Polyolefinen, wobei
man kontinuierlich

(1)  in einem Granulier-Extruder, der über eine Schmelzzone, eine Entgasungszone sowie eine Austragszone verfügt, (1.1) erst das kleinteilige Polyolefin in die Schmelzone einbringt, dort unter Aufschmelzen des Polyolefins von Umgebungstemperatur auf eine Temperatur im Bereich von 160 bis 430, insbesondere 200 bis 300°C erhitzt,
(1.2) dann das aufgeschmolzene Polyolefin in die Entgasungszone
weiterleitet, dort zum Abtreiben flüchtiger Bestandteile bei einer
Temperatur im Bereich von 160 bis 430, insbesondere 200 bis 300°C
einem Vakuum von 1 bis 500, insbesondere 10 bis 50 mbar aussetzt,
(1.3) daraufhin das entgaste Polyolefin in die Austragszone einbringt, dort auf einer Temperatur im Bereich von 160 bis 350, insbesondere 200 bis 300°C hält, wobei gewünschtenfalls Additive zugesetzt
werden, und (1.4) schließlich das auszutragende Polyolefin extrudiert
sowie granuliert, und

(2)  zum Polyolefin unmittelbar vor oder in der Schmelzzone eine kleine
Menge Propenoxid sowie eine kleine Menge Wasser zugibt.

Verfahren dieser Art sind nach Aufgabenstellung sowie Aufgabenlösung
bekannt; - wobei im gegebenen Zusammenhang als besonders relevant auf das
in der US-PS 3 925 341 beschriebene Verfahren verwiesen werden kann.

Dieses Verfahren hat sich in der Praxis gut bewährt, wenn es auch nicht
als ideal bezeichnet werden kann: Es weist z.B. - vor allem dann, wenn
man mit relativ kleinen Mengen Propenoxid arbeitet - noch das Manko auf,
daß die Verfahrensprodukte, d.h. die aufbereiteten Polyolefine, mitunter
eine noch unerwünscht deutliche Tendenz haben, bei ihrer thermoplastischen Weiterverarbeitung die hierbei benützten Maschinen korrosiv
anzugreifen.

Hier setzt die Aufgabe an, die zur vorliegenden Erfindung geführt hat:
Das eingangs definierte Verfahren so auszugestalten, daß - unter ver-
HWz/Ke gleichbaren Bedingungen - das oben genannte Manko nicht, oder in erheblich geringerem Ausmaß auftritt.

Es wurde gefunden, daß diese Aufgabe - überraschenderweise - gelöst werden kann, wenn man (a) mit relativ sehr kleinen Mengen Propenoxid arbeitet sowie (b) das Propenoxid als homogene, echte Lösung in Wasser einsetzt.

Der zuletzt genannten Maßgabe (b) kommt dabei das ausschlaggebende Gewicht zu.

Gegenstand der vorliegenden Erfindung ist dementsprechend ein Verfahren zur Aufbereitung von kleinteiligen, einen Teilchendurchmesser unter 5, insbesondere unter 3 mm aufweisenden, durch Polymerisation mittels Halogen, insbesondere Chlor enthaltender Ziegler-Natta-Katalysatoren gewonnenen Polyolefinen, wobei man kontinuierlich

(1) in einem Granulier Extruder, der über eine Schmelzzone, eine Entgasungszone sowie eine Austragszone verfügt, (1.1) erst das kleinteilige Polyolefin in die Schmelzzone einbringt, dort unter Aufschmelzen des Polyolefins von Umgebungstemperatur auf eine Temperatur im Bereich von 160 bis 430, insbesondere 200 bis 300°C erhitzt, (1.2) dann das aufgeschmolzene Polyolefin in die Entgasungszone weiterleitet, dort zum Abtreiben flüchtiger Bestandteile bei einer Temperatur im Bereich von 160 bis 430, insbesondere 200 bis 300°C einem Vakuum von 1 bis 500, insbesondere 10 bis 50 mbar aussetzt, (1.3) daraufhin das entgaste Polyolefin in die Austragszone einbringt, dort auf einer Temperatur im Bereich von 160 bis 350, insbesondere 200 bis 300°C hält, wobei gewünschtenfalls Additive zugesetzt werden, und (1.4) schließlich das auszutragende Polyolefin extrudiert sowie granuliert, und

(2) zum Polyolefin unmittelbar vor oder in der Schmelzzone eine kleine Menge Propenoxid sowie eine kleine Menge Wasser zugibt.

Das erfindungsgemäße Verfahren ist dadurch gekennzeichnet, daß (a) auf 1000 Gewichtsteile des Polyolefins 2 bis 5, vorzugsweise 2,0 bis 2,9, und insbesondere 2,0 bis 2,5 Gewichtsteile Propenoxid zugegeben werden und (b) das zuzugebende Propenoxid in Form einer homogenen echten Lösung in Wasser vorliegt, die auf 1000 Gewichtsteile Wasser 100 bis 450, insbesondere 250 bis 450 Gewichtsteile Propenoxid enthält.

0123882

Zu dem erfindungsgemäßen Verfahren ist im Einzelnen das folgende zu bemerken:

Die aufzubereitenden Polyolefine können die einschlägig üblichen sein; es sind vorzugsweise Homopolymerisate des Propylens sowie Copolymerisate des Propylens mit untergeordneten Mengen anderer $C_2$- bis $C_8$-ẃ-Monoolefine.

Der Halogen-, insbesondere der Chlorgehalt der aufzubereitenden Polyolefine kann 50 bis 600 Gewichts-ppm betragen, er beträgt zweckmäßigerweise 100 bis 400 Gewichts-ppm. Dieser Gehalt läßt sich durch das erfindungsgemäße Verfahren bis maximal auf etwa 1/10, im allgemeinen auf 1/3 bis 1/6 vermindern.

Die Art und Weise der Herstellung der aufzubereitenden Polyolefine ist nicht kritisch; sie kann die einschlägig übliche gewesen sein. Wie sich gezeigt hat, eignet sich das erfindungsgemäße Verfahren jedoch insbesondere zur Aufbereitung von Polymerisaten, die nach dem sog. Gasphasen- bzw. Trockenphasenpolymersationsverfahren erhalten worden sind; - einem Verfahren, dessen grundlegende Ausgestaltungen z.B. bekannt geworden sind aus den GB-PS 837 301, 1 006 469 sowie 1 032 945, und das bis zur großtechnischen Reife entwickelt worden ist, z.B. gemäß den aus den US-PS 4 012 573 sowie 4 330 645 bekannt gewordenen Verfahrensweisen.

Das erfindungsgemäße Aufbereitungs-Verfahren selbst kann mit bekannten und üblichen Granulier-Extrudern durchgeführt werden, die über eine Schmelzzone, eine Entgasungszone sowie eine Austragszone verfügen. Solche Extruder sind im Handel erhältlich, so daß sich nähere Ausführungen dazu erübrigen. Auch die Verfahrensbedingungen sind - abgesehen von der erfindungsgemäßen speziellen Ausgestaltung - mit keinen Besonderheiten verbunden. Zu erwähnen ist allenfalls, daß bei höheren Temperaturen und/oder längeren Verweilzeiten ein Abbau des Polymeren möglich ist.

Demgegenüber ist indes noch hervorzuheben, daß mit dem erfindungsgemäßen Verfahren Polyolefin-Granulate erhältlich sind, die sich u.a. durch einen besonders geringen Restgehalt an Propenoxid auszeichnen.

Beispiel 1

Es wurde ausgegangen von einem kleinteiligen Polypropylen, das durch Gasphasenpolymerisation mitteils eines üblichen, Chlor enthaltenden Ziegler-Natta-Katalysators gewonnen worden war, einen aus Katalysatorbestandteilen stammenden Chlorgehalt von 370 Gewichts-ppm aufwies und eine mittlere Teilchengröße (Durchmesser) von 0,55 mm hatte, wobei die größte Teilchengröße unter 3 mm lag.

Als Arbeitsvorrichtung diente ein handelsüblicher Granulier-Extruder, der eine Schmelz-, eine Entgasungs- sowie eine Austragszone hatte, wobei in die Schmelzzone eine Zuleitung (für die Propenoxid/Wasser-Lösung) führt.

Der Extruder wurde so betrieben, daß man kontinuierlich (1.1) erst das kleinteilige Polypropylen in die Schmelzzone einbrachte, dort unter Aufschmelzen des Polypropylens von Umgebungstemperatur auf eine Temperatur von etwa 250°C erhitzte, (1.2.) dann das aufgeschmolzene Polypropylen in die Entgasungszone weiterleitete, dort zum Abtreiben flüchtiger Bestandteile bei einer Temperatur von etwa 250°C einem Vakuum von etwa 20 mbar aussetzte, (1.3.) daraufhin das entgaste Polypropylen in die Austragszone einbrachte, dort auf einer Temperatur von etwa 250°C hielt, wobei als Additive zur Stabilisierung des Polypropylens (Wärme, Verarbeitung, Farbe) noch 1 Gewichtsteil ß-(3,5-Di-tert.-butyl-4-hydroxyphenyl)-propionsäure-n-octadecylester und 2 Gewichtsteile Calziumstearat pro 1000 Gewichtsteile Polypropylen zugesetzt wurden, und (1.4) schließlich das auszutragende Polypropylen extrudierte sowie granulierte.

Während des Betreibens des Extruders gab man zum Polypropylen in der Schmelzzone Propenoxid sowie Wasser derart, daß (a) auf 1000 Gewichtsteile des Polypropylens 2,1 Gewichtsteile Propenoxid zugegeben wurden und (b) das Propenoxid in Form einer homogenen echten Lösung in Wasser vorlag, die auf 1000 Gewichtsteile Wasser 300 Gewichtsteile Propenoxid enthielt.

Auf diese Weise wurde ein Polypropylengranulat erhalten, das einen Chlorgehalt von 70 Gewichts-ppm und einen Propenoxid-Restgehalt von 0,03 Gewichts-ppm aufwies.

Beispiel 2

Es wurde gearbeitet genau wie in Beispiel 1, jedoch mit den folgenden drei Modifikationen:

(i)     Es wurde ein Extruder verwendet, bei dem unmittelbar vor der Schmelzzone zwei Zuleitungen angeordnet waren.

(ii)    Während des Betreibens des Extruders gab man zum Polypropylen durch eine der Zuleitungen unmittelbar vor der Schmelzzone Propenoxid sowie Wasser derart, daß (a) auf 1000 Gewichtsteile des Polypropylens 3,5 Gewichtsteile Propenoxid zugegeben wurden und (b) das Propenoxid in Form einer homogenen echten Lösung in Wasser vorlag, die auf 1000 Gewichtsteile Wasser 350 Gewichtsteile Propenoxid enthielt.

(iii)     Es wurden keine Additive zugegeben.

Auf diese Weise wurde ein Polypropylengranulat erhalten, das einen Chlorgehalt von 70 Gewichts-ppm und einen Propenoxid-Restgehalt von    0,05 Gewichts-ppm aufwies.

Aus dem Granulat wurden auf einer einschlägig üblichen Spritzgußmaschine
in ununterbrochenem Betrieb bei einer Massetemperatur von 250°C gemäß
DIN 53443 scheibenförmige Probekörper von 60 mm Durchmesser und 2 mm
Dicke hergestellt. Dabei ergaben sich an der Maschine nach 10.000 Schuß
keine Anzeichen von Korrosion.

<u>Vergleichsversuch</u>

Es wurde gearbeitet genau wie in Beispiel 2, jedoch mit der folgenden
einzigen Modifikation:

Während des Betreibens des Extruders gab man zum Polypropylen getrennt
voneinander, jeweils durch eine der beiden Zuleitungen unmittelbar vor
der Schmelzzone Propenoxid sowie Wasser derart, daß auf 1000 Gewichtsteile des Polypropylens 3,5 Gewichtsteile Propenoxid sowie 10 Gewichtsteile Wasser zugegeben wurden.

Auf diese Weise wurde ein Polypropylengranulat erhalten, das einen Chlorgehalt von 120 Gewichts-ppm und einen Propenoxid-Restgehalt von 20 Gewichts-ppm aufwies.

Der wiederum exakt wie in Beispiel 2 durchgeführte Korrosionsversuch
ergab nach 10.000 Schuß deutliche Anzeichen von Korrosion an der Maschine.

## Patentanspruch

Verfahren zur Aufbereitung von kleinteiligen, einen Teilchendurchmesser unter 5 mm aufweisenden, durch Polymerisation mittels Halogen enthaltender Ziegler-Natta-Katalysatoren gewonnenen Polyolefinen, wobei man kontinuierlich

(1)  in einem Granulier-Extruder, der über eine Schmelzzone, eine Entgasungszone sowie eine Austragszone verfügt, (1.1) erst das kleinteilige Polyolefin in die Schmelzzone einbringt, dort unter Aufschmelzen des Polyolefins von Umgebungstemperatur auf eine Temperatur im Bereich von 160 bis 430°C erhitzt, (1.2) dann das aufgeschmolzene Polyolefin in die Entgasungszone weiterleitet, dort zum Abtreiben flüchtiger Bestandteile bei einer Temperatur im Bereich von 160 bis 430°C einem Vakuum von 1 bis 500 mbar aussetzt, (1.3) daraufhin das entgaste Polyolefin in die Austragszone einbringt, dort auf einer Temperatur im Bereich von 160 bis 350°C hält, wobei gewünschtenfalls Additive zugesetzt werden, und (1.4) schließlich das auszutragende Polyolefin extrudiert sowie granuliert, und

(2)  zum Polyolefin unmittelbar vor oder in der Schmelzzone eine kleine Menge Propenoxid sowie eine kleine Menge Wasser zugibt,

dadurch gekennzeichnet, daß (a) auf 1000 Gewichtsteile des Polyolefins 2 bis 5 Gewichtsteile Propenoxid zugegeben werden und (b) das zuzugebende Propenoxid in Form einer homogenen echten Lösung in Wasser vorliegt, die auf 1000 Gewichtsteile Wasser 100 bis 450 Gewichtsteile Propenoxid enthält.

EUROPÄISCHES PATENTAMT

**EUROPÄISCHER RECHERCHENBERICHT**

0123882

Nummer der Anmeldung

EP 84 10 3151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 258 345 (BASF) <br> * Anspruch; Seite 4, Zeilen 32-35 <br> * & US - A - 3 925 341 (Cat. D) <br><br> --- | 1 | C 08 F 6/02 |
| Y | EP-A-0 006 159 (BASF) <br> * Anspruch; Beispiel * <br><br> --- | 1 | |
| A | GB-A-1 091 644 (HERCULES) <br> * Ansprüche 1,2,5 * <br><br> ----- | 1 | |

| | RECHERCHIERTE SACHGEBIETE (Int. Cl. 3) |
|---|---|
| | C 08 F |

Der vorliegende Recherchenbericht wurde für alle Patentansprüche erstellt.

| Recherchenort <br> DEN HAAG | Abschlußdatum der Recherche <br> 19-07-1984 | Prüfer <br> HALLEMEESCH A.D. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82